(19) Europäisches Patentamt
European Patent Office
Office européen des brevets

(11) **EP 3 772 174 A1**

(12) **EUROPÄISCHE PATENTANMELDUNG**

(43) Veröffentlichungstag:
**03.02.2021 Patentblatt 2021/05**

(51) Int Cl.:
*H02P 27/08* (2006.01)   *H02M 1/15* (2006.01)

(21) Anmeldenummer: **20187886.5**

(22) Anmeldetag: **27.07.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **29.07.2019 DE 102019120436**

(71) Anmelder: **Valeo Siemens eAutomotive Germany GmbH**
**91056 Erlangen (DE)**

(72) Erfinder:
• **MANTZANAS, Panagiotis**
**91058 Erlangen (DE)**

• **KÜBRICH, Daniel**
**96132 Schlüsselfeld (DE)**
• **DÜRBAUM, Thomas**
**91083 Baiersdorf (DE)**
• **BUCHER, Alexander**
**90480 Nürnberg (DE)**
• **PAWELLEK, Alexander**
**91058 Erlangen (DE)**
• **HASENOHR, Christian**
**91056 Erlangen (DE)**
• **HOFMANN, Harald**
**90471 Nürnberg (DE)**

(74) Vertreter: **Dr. Gassner & Partner mbB**
**Wetterkreuz 3**
**91058 Erlangen (DE)**

(54) **STEUEREINRICHTUNG, WECHSELRICHTER, ANORDNUNG MIT EINEM WECHSELRICHTER UND EINER ELEKTRISCHEN MASCHINE, VERFAHREN ZUM BETREIBEN EINES WECHSELRICHTERS SOWIE COMPUTERPROGRAMM**

(57) Steuereinrichtung (8) für einen eine elektrische Maschine (3) speisenden Wechselrichter (2), wobei die Steuereinrichtung (8) zum Bereitstellen von pulsweitenmodulierten Schaltsignalen (15) mit einer Trägerfrequenz zum Ansteuern von Schaltelementen (12) des Wechselrichters (2) eingerichtet ist, wobei die Steuereinrichtung (8) dazu eingerichtet ist, eine Spannungsinformation (17), die eine gleichstromseitige Spannung des Wechselrichters (2) beschreibt, zu erhalten und die Trägerfrequenz zumindest innerhalb eines Spannungsintervalls (23) der gleichstromseitigen Spannung und zumindest während eines Betriebsmodus der Steuereinrichtung (8) derart in Abhängigkeit der Spannungsinformation (17) zu ermitteln, dass sich die Trägerfrequenz mit sinkender gleichstromseitiger Spannung erhöht.

**Fig. 1**

EP 3 772 174 A1

# EP 3 772 174 A1

**Beschreibung**

Die vorliegende Erfindung betrifft eine Steuereinrichtung für einen eine elektrische Maschine speisenden Wechselrichter, wobei die Steuereinrichtung zum Bereitstellen von pulsweitenmodulierten Schaltsignalen mit einer Trägerfrequenz zum Ansteuern von Schaltelementen des Wechselrichters eingerichtet ist.

Daneben betrifft die Erfindung einen Wechselrichter, eine Anordnung mit einem Wechselrichter und einer elektrischen Maschine, ein Verfahren zum Betreiben eines Wechselrichters sowie ein Computerprogramm.

Durch die zunehmende Bedeutung von elektrisch angetriebenen Fahrzeugen sind Wechselrichter und zugehörige Steuereinrichtungen für solche Anwendungsgebiete in den Fokus industrieller Entwicklungsbemühungen gerückt. Es sind derartige Steuereinrichtungen bekannt, die pulsweitenmodulierte Schaltsignale mit einer konstanten Trägerfrequenz zum Ansteuern von Schaltelementen des Wechselrichters bereitstellen.

Ein wichtiges Element des Wechselrichters ist dessen Zwischenkreiskondensator. Dieser soll eine möglichst konstante Zwischenkreisspannung bereitstellen. Ein hochfrequenter Schaltbetrieb der Schaltelemente verursacht hochfrequente Ströme, die idealerweise durch den Zwischenkreiskondensator fließen werden, während die Gleichspannungsquelle idealerweise einen reinen Gleichstrom liefert. Der Zwischenkreiskondensator dient mithin als Filter. Die hochfrequenten Kondensatorströme erzeugen am Zwischenkreiskondensator jedoch eine hochfrequente Rippelspannung. Je höher die Kapazität des Zwischenkreiskondensators und je geringer der interne Widerstand des Zwischenkreiskondensators ist, desto geringer ist die Rippelspannung. Allerdings steigen auch mit steigender Kapazität der für den Zwischenkreiskondensator erforderliche Bauraum, sein Gewicht und die Herstellungskosten. Dies zieht insbesondere im Hinblick auf einen Einsatz im Bereich der Elektromobilität unerwünscht hohe Aufwände nach sich.

Der Erfindung liegt mithin die Aufgabe zugrunde, eine Möglichkeit zur aufwandsärmeren Realisierung eines Wechselrichters anzugeben, bei der insbesondere der Bauraum, das Gewicht und die Kosten eines Zwischenkreiskondensators reduziert werden.

Diese Aufgabe wird erfindungsgemäß gelöst durch eine Steuereinrichtung der eingangs genannten Art, welche dazu eingerichtet ist, eine Spannungsinformation, die eine gleichstromseitige Spannung des Wechselrichters beschreibt, zu erhalten und die Trägerfrequenz zumindest innerhalb eines Spannungsintervalls der gleichstromseitigen Spannung und zumindest während eines Betriebsmodus der Steuereinrichtung derart in Abhängigkeit der Spannungsinformation zu ermitteln, dass sich die Trägerfrequenz mit sinkender gleichstromseitiger Spannung erhöht.

Die Erfindung beruht auf der Erkenntnis, dass ein Spitze-Tal-Wert einer Rippelspannung an einem Zwischenkreiskondensator des Wechselrichters ganz erheblich von der gleichstromseitigen Spannung und der Trägerfrequenz der pulsweitenmodulierten Schaltsignale bestimmt wird. Dabei wurde erkannt, dass einerseits bei kleinen gleichstromseitigen Spannungen wegen Veränderungen eines Modulationsindex der Pulsweitenmodulation ein höherer Spitze-Tal-Wert der Rippelspannung als bei höheren gleichstromseitigen Spannungen auftritt und andererseits mit steigender Trägerfrequenz ein geringerer Spitze-Tal-Wert der Rippelspannung auftritt. Die erfindungsgemäße Steuereinrichtung ist daher dazu eingerichtet, mit sinkender gleichstromseitiger Spannung, beispielsweise bei einer fortgeschrittenen Entladung einer den Wechselrichter versorgenden Batterie, eine höhere Trägerfrequenz vorzugeben und damit dem Anstieg des Spitze-Tal-Werts der Rippelspannung entgegenzuwirken.

Bei der Verwendung der erfindungsgemäßen Steuereinrichtung ist es folglich nicht mehr erforderlich, die Kapazität eines Zwischenkreiskondensators des Wechselrichters auf das Auftreten hoher Spitze-Tal-Werte der Zwischenkreisspannung bei einer geringen Zwischenkreisspannung auszulegen. Es kann daher im Vergleich zur Verwendung einer herkömmlichen Steuereinrichtung ein bauraumsparenderer, leichterer und günstigerer Zwischenkreiskondensator zum Einsatz kommen, wodurch vorteilhafterweise eine aufwandsärmere Realisierung des Wechselrichters ermöglicht wird.

In diesem Zusammenhang sei darauf hingewiesen, dass die Erhöhung der Trägerfrequenz zwar zu einer Erhöhung von Schaltverlusten der Schaltelemente führt. Allerdings sinken diese Schaltverluste wiederum mit der Verringerung der gleichstromseitigen Spannung. Ferner hat eine Veränderung der gleichstromseitigen Spannung und der Trägerfrequenz nur einen vernachlässigbaren Einfluss auf Leitungsverluste im Wechselrichter. Es ist daher zumindest für praktisch relevante Betriebsfälle möglich, durch die erfindungsgemäß vorgesehene Erhöhung der Trägerfrequenz bei sinkender gleichstromseitiger Spannung eine Reduktion des Spitze-Tal-Werts der Zwischenkreisspannung zu erzielen, ohne dadurch die sich aus Schaltverlusten und Leitungsverlusten zusammensetzenden Gesamtverluste über einen bei einer maximal vorgesehenen gleichstromseitigen Spannung entstehenden Wert hinaus zu erhöhen.

Es wird bei der erfindungsgemäßen Steuereinrichtung bevorzugt, dass diese dazu eingerichtet ist, die Trägerfrequenz während des Betriebsmodus oberhalb einer oberen Grenze des Spannungsintervalls als feste Grundfrequenz zu ermitteln. Mithin kann für hohe gleichstromseitige Spannungen bis zum Unterschreiten der oberen Grenze des Spannungsintervalls die Grundfrequenz vorgegeben werden und erst nach dem Unterschreiten der oberen Grenze die Erhöhung der Trägerfrequenz erfolgen.

Alternativ oder zusätzlich kann bei der erfindungsgemäßen Steuereinrichtung vorgesehen sein, dass diese dazu eingerichtet ist, die Trägerfrequenz während des Betriebsmodus unterhalb einer unteren Grenze des Spannungsintervalls als feste Höchstfrequenz zu ermitteln. Mithin kann für niedrige gleichstromseitige Spannungen nach dem Unterschreiten der unteren Grenze des Spannungsintervalls die Höchstfrequenz vorgegeben werden. Dadurch kann verhindert werden, dass die Trägerfrequenz ein unerwünscht hohes Niveau bei sehr geringen gleichstromseitigen Spannungen annimmt.

Es ist selbstverständlich auch denkbar, dass das Spannungsintervall einen Bereich von null Volt bis zur maximal vorgesehenen gleichstromseitigen Spannung umfasst.

Um eine besonders aufwandsarme Implementierung der erfindungsgemäßen Steuereinrichtung zu ermöglichen, ist diese bevorzugt dazu eingerichtet, die Trägerfrequenz aus einem Kennfeld, das Werten der gleichstromseitigen Spannung Trägerfrequenzwerte zuordnet, auszuwählen. Das Kennfeld kann beispielsweise durch eine Look-Up-Tabelle realisiert sein. Typischerweise weist die Steuereinrichtung eine Speichereinheit auf, in welcher das Kennfeld gespeichert ist.

Es kann ferner vorgesehen sein, dass das Kennfeld eine zumindest stückweise lineare Zuordnung der Werte der gleichstromseitigen Spannung und der Trägerfrequenzwerte beschreibt. Alternativ ist es möglich, dass das Kennfeld über diskrete Werte der gleichstromseitigen Spannung definiert ist und die Steuereinrichtung dazu eingerichtet ist, die Trägerfrequenz durch, insbesondere lineare, Interpolation der den diskreten Werten zugeordneten Trägerfrequenzwerten zu ermitteln.

Alternativ zur Verwendung eines Kennfelds kann die erfindungsgemäße Steuereinrichtung dazu eingerichtet sein, die Trägerfrequenz mittels einer analytischen Berechnungsvorschrift, aus welcher die Trägerfrequenz in Abhängigkeit der gleichstromseitigen Spannung ermittelbar ist, zu ermitteln.

Das Kennfeld oder die Berechnungsvorschrift kann beispielsweise durch Messung oder Simulation für eine bestimmte Konfiguration des Wechselrichters und der elektrischen Maschine ermittelt worden sein.

Es ist außerdem vorteilhaft, wenn die erfindungsgemäße Steuereinrichtung dazu eingerichtet ist, in Abhängigkeit einer einen Arbeitspunkt, der durch eine Drehzahl und ein Drehmoment der elektrischen Maschine definiert ist, beschreibenden Arbeitspunktinformation einen vom ersten Betriebsmodus unterschiedlichen, einen Teillastbetrieb beschreibenden zweiten Betriebsmodus einzunehmen und die Trägerfrequenz im zweiten Betriebsmodus fest vorzugeben oder arbeitspunktabhängig zu ermitteln. Dadurch kann vermieden werden, dass eine Teillasteffizienz des Wechselrichters bzw. der elektrischen Maschine bei niedrigen gleichstromseitigen Spannungen verringert wird.

Grundsätzlich kann die Trägerfrequenz auch im ersten Betriebsmodus arbeitspunktabhängig ermittelbar sein.

Die erfindungsgemäße Steuereinrichtung kann ferner dazu eingerichtet sein, eine aktualisierte Trägerfrequenz jeweils bei Erhalt einer aktualisierten Spannungsinformation und/oder nach Ablauf einer vorgegebenen oder vorgebbaren Zeitspanne und/oder nach Abschluss einer elektrischen Periode der elektrischen Maschine und/oder nach Abschluss einer Periode eines jeweiligen Schaltsignals zu ermitteln. So kann die Trägerfrequenz zu zweckmäßigen Zeitpunkten jeweils an die gleichstromseitige Spannung angepasst werden.

Die gleichstromseitige Spannung kann eine Zwischenkreisspannung oder eine Ausgangsspannung einer den Wechselrichter speisenden Gleichspannungsquelle, insbesondere einer Batterie, sein.

Die Steuereinrichtung kann grundsätzlich eine Messeinrichtung umfassen, welche dazu eingerichtet ist, die gleichstromseitige Spannung zu erfassen und die Spannungsinformation bereitzustellen. Es ist aber bevorzugt, wenn die Steuereinrichtung einen Eingang aufweist, an welchem die Spannungsinformation von einer externen Messeinrichtung erhältlich ist.

Die der Erfindung zu Grunde liegende Aufgabe wird ferner gelöst durch einen Wechselrichter, umfassend einen Zwischenkreiskondensator, Schaltelemente, die dazu verschaltet sind, eine am Zwischenkreiskondensator anliegende Spannung in Abhängigkeit von die Schaltelemente ansteuernden Schaltsignalen in eine ein-oder mehrphasige Wechselspannung zu wandeln, und eine erfindungsgemäße Steuereinrichtung.

Der Zwischenkreiskondensator kann durch ein einziges Kondensatorelement oder durch mehrere parallel und/oder in Reihe verschaltete Kondensatorelemente ausgebildet sein.

Der Wechselrichter kann ferner einen Analog-Digital-Umsetzer umfassen, welcher dazu eingerichtet ist, analoge Messsignale in die digitale Spannungsinformation umzusetzen.

Die der Erfindung zu Grunde liegende Aufgabe wird ferner gelöst durch eine Anordnung mit einem erfindungsgemäßen Wechselrichter und einer elektrischen Maschine, die mittels der Wechselspannung betreibbar ist.

Dabei wird es bevorzugt, wenn das Ermitteln der Trägerfrequenz den Zusammenhang

$$\frac{u_{DC,pp}\big|_{f=f_{PWM,1}}}{u_{DC,pp}\big|_{f=f_{PWM,2}}} = \frac{f_{PWM,2}}{f_{PWM,1}}$$

beim Betrieb der Anordnung abbildet, wobei

- $u_{DC,pp}\big|_{f=f_{PWM,n}}$ einen Spitze-Tal-Wert der am Zwischenkreiskondensator anliegenden Spannung bei einer Trägerfrequenz $f_{PWM,n}$ (n = 1, 2),
- $f_{PWM,1}$ eine erste Trägerfrequenz und
- $f_{PWM,2}$ eine zweite Trägerfrequenz

beschreiben.

Die der Erfindung zu Grunde liegende Aufgabe wird ferner gelöst durch ein Verfahren zum Betreiben eines Wechselrichters zum Versorgen einer elektrischen Maschine, umfassend folgende von einer Steuereinrichtung durchgeführte Schritte: Erhalten einer Spannungsinformation, die eine gleichstromseitige Spannung des Wechselrichters beschreibt; Ermitteln einer Trägerfrequenz von pulsweitenmodulierten Schaltsignalen zum Ansteuern des Wechselrichters in Abhängigkeit der Spannungsinformation derart, dass sich die Trägerfrequenz mit sinkender gleichstromseitiger Spannung erhöht; und Bereitstellen der Schaltsignale für Schaltelemente des Wechselrichters.

Das erfindungsgemäße Verfahren kann ferner folgenden Schritt umfassen: Überprüfen, ob die gleichstromseitige Spannung innerhalb eines Spannungsintervalls liegt, wonach das Ermitteln der Trägerfrequenz in Abhängigkeit der Spannungsinformation erfolgt, wenn die gleichstromseitige Spannung innerhalb des Spannungsintervalls liegt. Wenn die gleichstromseitige Spannung oberhalb einer oberen Grenze des Spannungsintervalls liegt, kann die Trägerfrequenz als feste Grundfrequenz ermittelt werden. Alternativ oder zusätzlich kann die Trägerfrequenz als feste Höchstfrequenz ermittelt werden, wenn die gleichstromseitige Spannung unterhalb einer unteren Grenze des Spannungsintervalls liegt.

Außerdem kann das erfindungsgemäße Verfahren ferner folgende Schritte umfassen: Erhalten einer einen Arbeitspunkt, der durch eine Drehzahl und ein Drehmoment der elektrischen Maschine definiert ist, beschreibenden Arbeitspunktinformation; und Überprüfen, ob der Arbeitspunkt einen Teillastbetrieb der elektrischen Maschine beschreibt. Dabei kann vorgesehen sein, dass ein das Ermitteln der Trägerfrequenz in Abhängigkeit der Spannungsinformation umfassender erster Betriebsmodus eingenommen wird, wenn kein Teillastbetrieb vorliegt, und/oder ein zweiter Betriebsmodus eingenommen wird, in dem die Trägerfrequenz fest vorgegeben oder arbeitspunktabhängig ermittelt wird, wenn der Teillastbetrieb vorliegt.

Die der Erfindung zu Grunde liegende Aufgabe wird schließlich ferner gelöst durch ein Computerprogramm, umfassend Befehle, die bei der Ausführung des Programms durch einen Computer diesen veranlassen, die von der Steuereinrichtung durchgeführten Schritte des erfindungsgemäßen Verfahrens auszuführen.

Sämtliche Ausführungen zur erfindungsgemäßen Steuereinrichtung, zum erfindungsgemäßen Wechselrichter und zur erfindungsgemäßen Anordnung lassen sich analog auf das erfindungsgemäße Verfahren und das erfindungsgemäße Computerprogramm übertragen, sodass die vorgenannten Vorteile auch mit diesen erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:

Fig. 1    ein Blockschaltbild eines Ausführungsbeispiels einer erfindungsgemäßen Anordnung mit einem Ausführungsbeispiel eines erfindungsgemäßen Wechselrichters und einem Ausführungsbeispiel einer erfindungsgemäßen Steuereinrichtung;

Fig. 2    ein Diagramm einer Trägerfrequenz über eine gleichstromseitige Spannung;

Fig. 3    ein Diagramm eines Spitze-Tal-Werts einer Zwischenkreisspannung über eine Drehzahl einer Anordnung nach dem Stand der Technik; und

Fig. 4    ein Diagramm eines Spitze-Tal-Werts einer Zwischenkreisspannung über eine Drehzahl bei einer exemplarischen Konfiguration der in Fig. 1 gezeigten Anordnung sowie einer in Fig. 2 gezeigten Trägerfrequenz.

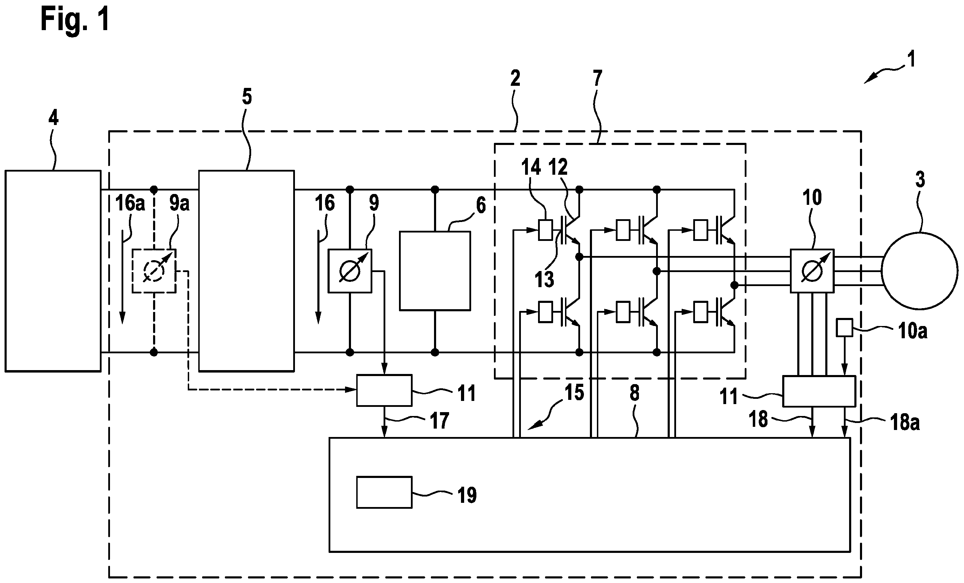

Fig. 1 ist ein Blockschaltbild eines Ausführungsbeispiels einer Anordnung 1, umfassend ein Ausführungsbeispiel eines Wechselrichters 2 und eine elektrische Maschine 3, die zum Antrieb eines teilweise oder vollständig elektrisch antreibbaren Fahrzeugs eingerichtet ist. Die Anordnung 1 umfasst ferner eine Gleichspannungsquelle 4, die vorliegend als Hochvoltbatterie ausgebildet ist.

Der Wechselrichter 2 umfasst eine Filtereinrichtung 5, die vorliegend als EMV-Filter ausgebildet ist, einen Zwischenkreiskondensator 6, eine Leistungseinheit 7, ein Ausführungsbeispiel einer Steuereinrichtung 8, eine erste Messeinrichtung 9, eine zweite Messeinrichtung 10 sowie eine Analog-Digital-Umsetzereinrichtung 11, die aus Gründen der Übersichtlichkeit durch zwei Blöcke dargestellt ist.

Die Leistungseinheit 7 umfasst mehrere Schaltelemente 12, die als Halbleiter-Schaltelemente, beispielsweise als IGBT oder Leistungs-MOSFET, ausgebildet sind. Die Schaltelemente 12 sind paarweise zu Halbbrücken verschaltet. Einem Steuereingang 13 eines jeweiligen Schaltelements 12 ist ein Treiber 14 vorgeschaltet. Dabei sind aus Gründen der Übersichtlichkeit lediglich ein Schaltelement 12 und ein Treiber 14 mit Bezugszeichen versehen. Die Treiber 14 erhalten pulsweitenmodulierte Schaltsignale 15 von der Steuereinrichtung 8, welche derart bereitgestellt werden, dass an einem jeweiligen Abgriff der Halbbrücken eine Spannung zur Speisung der elektrischen Maschine 3 bereitgestellt wird. Die Leistungseinheit 7 richtet mithin in Abhängigkeit der Schaltsignale 15 eine durch den Zwischenkreiskondensator 6 geglättete Zwischenkreisspannung 16 in eine, vorliegend dreiphasige, Wechselspannung um.

Die erste Messeinrichtung 9 ist dazu eingerichtet, die Zwischenkreisspannung als gleichstromseitige Spannung des Wechselrichters 2 zu erfassen und der Analog-Digital-Umsetzereinrichtung 11 analoge Messsignale bereitzustellen. Diese setzt die analogen Messsignale in eine digitale Spannungsinformation 17 um. Die zweite Messeinrichtung 10 ist entsprechend dazu eingerichtet, die Phasenströme zu erfassen und Messsignale der Analog-Digital-Umsetzereinrichtung 11 bereitzustellen, welche die analogen Messsignale der zweiten Messeinrichtung 10 in eine digitale Strominformation 18 umsetzt. Schließlich ist die dritte Messeinrichtung 10a dazu eingerichtet, eine Drehzahl der elektrischen Maschine 3 zu erfassen und Messsignale der Analog-Digital-Umsetzereinrichtung 11 bereitzustellen, welche die analogen Messsignale der dritten Messeinrichtung 10a in eine digitale Drehzahlinformation 18a umsetzt. Die Steuereinrichtung 8 erhält eingangsseitig die Spannungsinformation 17, die Strominformation 18 und die Drehzahlinformation 18a.

Anhand der Strom information 18 und der Drehzahlinformation 18a ermittelt die Steuereinrichtung 8 eine Arbeitspunktinformation, die einen durch eine Drehzahl und ein Drehmoment der elektrischen Maschine 3 definierten Arbeitspunkt beschreibt. Ergibt sich aus dem Arbeitspunkt, dass die elektrische Maschine 3 nicht in einem Teillastbetrieb betrieben wird, nimmt die Steuereinrichtung 8 einen ersten Betriebsmodus ein. Ergibt sich aus der Arbeitspunktinformation hingegen, dass sich die elektrische Maschine im Teillastbetrieb befindet, so nimmt die Steuereinrichtung 8 einen zweiten Betriebsmodus ein, in welchem eine Trägerfrequenz der Pulsweitenmodulation fest vorgegeben oder anderweitig arbeitspunktabhängig ermittelt wird.

Die Steuereinrichtung 8 ist dazu eingerichtet, eine Trägerfrequenz der pulsweitenmodulierten Schaltsignale 15 im ersten Betriebsmodus derart in Abhängigkeit der Spannungsinformation 17 zu ermitteln, dass sich die Trägerfrequenz mit sinkender gleichstromseitiger Spannung erhöht. Dazu umfasst die Steuereinrichtung 8 eine Speichereinheit 19, in welcher ein Kennfeld, das Werten der gleichstromseitigen Spannung Trägerfrequenzwerte zuordnet, gespeichert ist.

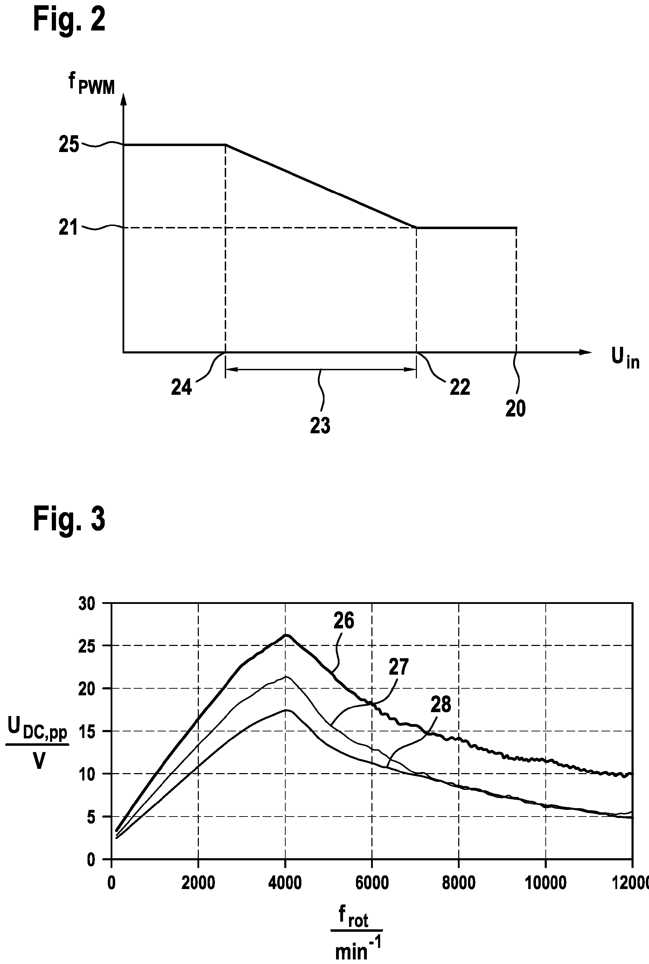

Fig. 2 ist ein Diagramm einer Trägerfrequenz $f_{PWM}$ über die gleichstromseitige Spannung Uin. Das Diagramm bildet das Kennfeld ab, welches eine abschnittsweise lineare Zuordnung der Werte der gleichstromseitigen Spannung und Trägerfrequenzwerte beschreibt.

Bei einer maximalen gleichstromseitigen Spannung 20 wird im ersten Betriebsmodus eine Grundfrequenz 21 vorgegeben. Sinkt die Spannung Uin auf eine obere Grenze 22 eines Spannungsintervalls 23 ab, beispielsweise weil sich die Gleichspannungsquelle 4 entladen hat, sieht das Kennfeld für sinkende Werte der gleichstromseitigen Spannung Uin eine Erhöhung der Trägerfrequenz $f_{PWM}$ vor, bis diese eine untere Grenze 24 des Spannungsintervalls 23 erreicht. Bei einem Absinken der gleichstromseitigen Spannung $U_{in}$ unter die unteren Grenze 24 sieht das Kennfeld eine feste Höchstfrequenz 25 als Trägerfrequenz vor.

Das Kennfeld bildet dabei innerhalb des Spannungsintervalls 23 den Zusammenhang

$$\frac{u_{DC,pp}\big|_{f=f_{PWM,1}}}{u_{DC,pp}\big|_{f=f_{PWM,2}}} = \frac{f_{PWM,2}}{f_{PWM,1}}$$

beim Betrieb der Anordnung 1 ab. Darin beschreiben $u_{DC,pp}\big|_{f=f_{PWM,n}}$ einen Spitze-Tal-Wert der am Zwischenkreiskondensator anliegenden Spannung bei einer Trägerfrequenz $f_{PWM,n}$ (n = 1, 2), $f_{PWM,1}$ eine erste Trägerfrequenz und $f_{PWM,2}$ eine zweite Trägerfrequenz. Der Spitze-Tal-Wert $u_{DC,pp}$ der am Zwischenkreiskondensator 6 anliegenden Spannung ist wie folgt definiert:

$$u_{DC,pp} = \max(u_{DC}(t)) - \min(u_{DC}(t))$$

Darin beschreibt $u_{DC}(t)$ den zeitlichen Verlauf der Zwischenkreisspannung 16 (siehe Fig. 1) über eine elektrische Motorperiode.

**EP 3 772 174 A1**

Die Steuereinrichtung 8 ist dazu eingerichtet, die Trägerfrequenz regelmäßig zu aktualisieren. Dies erfolgt beispielsweise bei Erhalt einer aktualisierten Spannungsinformation, nach Ablauf einer vorgegebenen oder vorgebbaren Zeitspanne, nach Abschluss einer elektrischen Periode der elektrischen Maschine 3 oder nach Abschluss einer Periode eines jeweiligen Schaltsignals 15. Es sind auch Kombinationen der zuvor genannten Aktualisierungsereignisse möglich.

Gemäß einem weiteren Ausführungsbeispiel der Steuereinrichtung 8 ist das Kennfeld über diskrete Werte der gleichstromseitigen Spannung definiert und die Steuereinrichtung 8 ist dazu eingerichtet, die Trägerfrequenz durch lineare Interpolation der den diskreten Werte zugeordneten Trägerfrequenzwerten zu ermitteln. Gemäß einem weiteren Ausführungsbeispiel ist die Steuereinrichtung 8 dazu eingerichtet, die Trägerfrequenz statt anhand des Kennfelds mittels einer analytischen Berechnungsvorschrift, aus welcher die Trägerfrequenz in Abhängigkeit der gleichstromseitigen Spannung ermittelbar ist, zu ermitteln. Schließlich ist gemäß einem weiteren Ausführungsbeispiel vorgesehen, dass als gleichstromseitige Spannung eine Ausgangsspannung 16a der Gleichspannungsquelle 4 verwendet wird. In diesem Fall ist anstelle der ersten Messeinrichtung 9 eine erste Messeinrichtung 9a vorgesehen, die entsprechende Messsignale der Analog-Digital-Umsetzereinrichtung 11 bereitstellt. Gemäß einem weiteren Ausführungsbeispiel wird das Drehmoment als Teil der Arbeitspunktinformation nicht anhand der Strominformation 18 ermittelt, sondern im Rahmen einer Regelung zur Ermittlung der Schaltsignale 15 durch die Steuereinrichtung 8 geschätzt.

Im Folgenden wird die Funktion der Anordnung 1 näher anhand einer exemplarischen Konfiguration beschrieben.

Dazu zeigt Fig. 3 zunächst ein Diagramm eines Spitze-Tal-Werts $u_{DC,pp}$ einer Zwischenkreisspannung über eine Drehzahl $f_{rot}$ einer Anordnung nach dem Stand der Technik, bei dem die Trägerfrequenz stets konstant mit 10 kHz vorgegeben wird. In Fig. 3 sind dazu ein Verlauf 26 des Spitze-Tal-Werts $u_{DC,pp}$ bei einer Zwischenkreisspannung von 270 V, ein Verlauf 27 des Spitze-Tal-Werts $u_{DC,pp}$ bei einer Zwischenkreisspannung von 350 V und ein Verlauf 28 des Spitze-Tal-Werts $u_{DC,pp}$ bei einer Zwischenkreisspannung von 450 V dargestellt.

Ersichtlich ist, dass der Spitze-Tal-Wert um eine Drehzahl von ca. 4000 min$^{-1}$, bei welcher die elektrische Maschine in einen Feldschwächebetrieb bzw. bei maximalem Drehmoment in eine Leistungsbegrenzung übergeht, bei der geringen Zwischenkreisspannung von 270 V am höchsten und bei der Zwischenkreisspannung von 450 V am niedrigsten ist. Dies hat zur Folge, dass sich die Kapazität des Zwischenkreiskondensators am Maximum des Verlaufs 26 zu orientieren hat.

Die folgende Tabelle zeigt den maximale Spitze-Tal-Wert $u_{DC,pp,max}$ der am Zwischenkreiskondensator 6 anliegenden Spannung, die maximalen Schaltverluste des Wechselrichters $P_{S,max}$, die maximalen Leitungsverluste des Wechselrichters $P_{L,max}$ und die maximalen Gesamtverluste des Wechselrichters $P_{tot,max}$ der Anordnung nach dem Stand der Technik bei unterschiedlichen Zwischenkreisspannungen $U_{DC}$ und einer Trägerfrequenz $f_{PWM}$ = 10 kHz:

| $U_{DC}$ | $f_{PWM}$ | $u_{DC,pp,max}$ | $P_{S,max}$ | $P_{L,max}$ | $P_{tot,max}$ |
|---|---|---|---|---|---|
| 270 V | 10 kHz | 26,21 V | 1,16 kW | 1,84 kW | 3,00 kW |
| 350 V | 10 KHz | 21,29 V | 1,52 kW | 1,82 kW | 3,34 kW |
| 450 V | 10 kHz | 17,38 V | 1,97 kW | 1,82 kW | 3,79 kW |

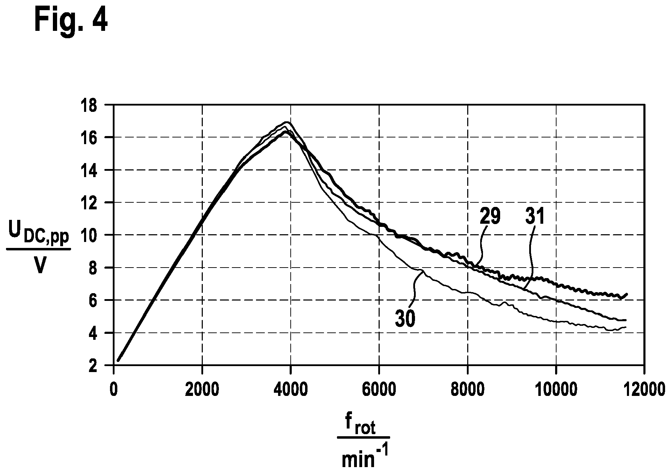

Fig. 4 ist ein Diagramm des Spitze-Tal-Werts $u_{DC,pp}$ der Zwischenkreisspannung über die Drehzahl $f_{rot}$ des Ausführungsbeispiels der Anordnung 1, bei dem die Trägerfrequenz veränderlich vorgegeben wird. In Fig. 4 sind dazu ein Verlauf 29 des Spitze-Tal-Werts $u_{DC,pp}$ bei einer Zwischenkreisspannung von 270 V, ein Verlauf 30 des Spitze-Tal-Werts $u_{DC,pp}$ bei einer Zwischenkreisspannung von 350 V und ein Verlauf 31 des Spitze-Tal-Werts $u_{DC,pp}$ bei einer Zwischenkreisspannung von 450 V dargestellt.

Ersichtlich sind die Maxima der Verläufe 29, 30, 31 um die Drehzahl von ca. 4000 min$^{-1}$, welche im Wesentlichen dem Niveau des Verlaufs 28 in Fig. 3 angeglichen worden sind. Dies hat zur Folge, dass der Zwischenkreiskondensator 6 mit einer wesentlich geringeren Kapazität als bei der Verwendung einer konstanten Trägerfrequenz gewählt werden kann.

Die folgende Tabelle zeigt den maximalen Spitze-Tal-Wert $u_{DC,pp,max}$ der am Zwischenkreiskondensator 6 anliegenden Spannung, die maximalen Schaltverluste des Wechselrichters $P_{S,max}$, die maximalen Leitungsverluste des Wechselrichters $P_{L,max}$ und die maximalen Gesamtverluste des Wechselrichters $P_{tot,max}$ der Anordnung 1 bei unterschiedlichen Zwischenkreisspannungen $U_{DC}$ und einer angepassten Trägerfrequenz gemäß dem Ausführungsbeispiel:

| $U_{DC}$ | $f_{PWM}$ | $u_{DC,pp,max}$ | $P_{S,max}$ | $P_{L,max}$ | $P_{tot,max}$ |
|---|---|---|---|---|---|
| 270 V | 15,1 kHz | 16,75V | 1,76 kW | 1,84 kW | 3,59 kW |
| 350 V | 12,3 KHz | 17,08 V | 1,87 kW | 1,82 kW | 3,69 kW |

(fortgesetzt)

| $U_{DC}$ | $f_{PWM}$ | $u_{DC,pp,max}$ | $P_{S,max}$ | $P_{L,max}$ | $P_{tot,max}$ |
|---|---|---|---|---|---|
| 450 V | 10,0 kHz | 17,38 V | 1,97 kW | 1,82 kW | 3,79 kW |

Wie durch einen Vergleich der Tabellen ersichtlich ist, führt die Verwendung der höheren Trägerfrequenz bei niedrigeren Zwischenkreisspannungen vorteilhafterweise nicht zu einer Erhöhung der Schaltverluste bzw. der Gesamtverluste über das Maß bei der höchstmöglichen Zwischenkreisspannung $U_{DC}$ = 450 V hinaus.

**Patentansprüche**

1. Steuereinrichtung (8) für einen eine elektrische Maschine (3) speisenden Wechselrichter (2), wobei die Steuereinrichtung (8) zum Bereitstellen von pulsweitenmodulierten Schaltsignalen (15) mit einer Trägerfrequenz zum Ansteuern von Schaltelementen (12) des Wechselrichters (2) eingerichtet ist,
**dadurch gekennzeichnet, dass**
die Steuereinrichtung (8) dazu eingerichtet ist, eine Spannungsinformation (17), die eine gleichstromseitige Spannung des Wechselrichters (2) beschreibt, zu erhalten und die Trägerfrequenz zumindest innerhalb eines Spannungsintervalls (23) der gleichstromseitigen Spannung und zumindest während eines Betriebsmodus der Steuereinrichtung (8) derart in Abhängigkeit der Spannungsinformation (17) zu ermitteln, dass sich die Trägerfrequenz mit sinkender gleichstromseitiger Spannung erhöht.

2. Steuereinrichtung nach Anspruch 1,
welche dazu eingerichtet ist, die Trägerfrequenz während des Betriebsmodus

   - oberhalb einer oberen Grenze (22) des Spannungsintervalls (23) als feste Grundfrequenz (21) zu ermitteln und/oder
   - unterhalb einer unteren Grenze (24) des Spannungsintervalls (23) als feste Höchstfrequenz (25) zu ermitteln.

3. Steuereinrichtung nach Anspruch 1 oder 2,
welche dazu eingerichtet ist, die Trägerfrequenz aus einem Kennfeld, das Werten der gleichstromseitigen Spannung Trägerfrequenzwerte zuordnet, auszuwählen.

4. Steuereinrichtung nach Anspruch 3, wobei

   - das Kennfeld eine zumindest stückweise lineare Zuordnung der Werte der gleichstromseitigen Spannung und der Trägerfrequenzwerte beschreibt oder
   - das Kennfeld über diskrete Werte der gleichstromseitigen Spannung definiert ist und die Steuereinrichtung (8) dazu eingerichtet ist, die Trägerfrequenz durch, insbesondere lineare, Interpolation der den diskreten Werten zugeordneten Trägerfrequenzwerten zu ermitteln.

5. Steuereinrichtung nach Anspruch 1 oder 2,
welche dazu eingerichtet ist, die Trägerfrequenz mittels einer analytischen Berechnungsvorschrift, aus welcher die Trägerfrequenz in Abhängigkeit der gleichstromseitigen Spannung ermittelbar ist, zu ermitteln.

6. Steuereinrichtung nach einem der vorhergehenden Ansprüche,
welche dazu eingerichtet ist, in Abhängigkeit einer einen Arbeitspunkt, der durch eine Drehzahl und ein Drehmoment der elektrischen Maschine (3) definiert ist, beschreibenden Arbeitspunktinformation einen vom ersten Betriebsmodus unterschiedlichen, einen Teillastbetrieb beschreibenden zweiten Betriebsmodus einzunehmen und die Trägerfrequenz im zweiten Betriebsmodus fest vorzugeben oder arbeitspunktabhängig zu ermitteln.

7. Steuereinrichtung nach einem der vorhergehenden Ansprüche,
welche dazu eingerichtet ist, eine aktualisierte Trägerfrequenz jeweils

   - bei Erhalt einer aktualisierten Spannungsinformation (17) und/oder
   - nach Ablauf einer vorgegebenen oder vorgebbaren Zeitspanne und/oder
   - nach Abschluss einer elektrischen Periode der elektrischen Maschine (3) und/oder

- nach Abschluss einer Periode eines jeweiligen Schaltsignals (15) zu ermitteln.

8. Steuereinrichtung nach einem der vorhergehenden Ansprüche, wobei
die gleichstromseitige Spannung eine Zwischenkreisspannung (16) oder eine Ausgangsspannung (16a) einer den Wechselrichter (2) speisenden Gleichspannungsquelle (4) ist.

9. Wechselrichter (2), umfassend

- einen Zwischenkreiskondensator (6),
- Schaltelemente (12), die dazu verschaltet sind, eine am Zwischenkreiskondensator (6) anliegende Spannung in Abhängigkeit von die Schaltelemente (12) ansteuernden Schaltsignalen (15) in eine ein- oder mehrphasige Wechselspannung umzurichten, und
- eine Steuereinrichtung (8) nach einem der vorhergehenden Ansprüche.

10. Anordnung (1) mit einem Wechselrichter (2) nach Anspruch 9 und einer elektrischen Maschine (3), die mittels der Wechselspannung betreibbar ist.

11. Anordnung nach Anspruch 10, wobei
das Ermitteln der Trägerfrequenz den Zusammenhang

$$\frac{u_{DC,pp}\big|_{f=f_{PWM,1}}}{u_{DC,pp}\big|_{f=f_{PWM,2}}} = \frac{f_{PWM,2}}{f_{PWM,1}}$$

beim Betrieb der Anordnung abbildet, wobei

- $u_{DC,pp}\big|_{f=f_{PWM,n}}$ einen Spitze-Tal-Wert der am Zwischenkreiskondensator (6) anliegenden Spannung bei einer Trägerfrequenz $f_{PWM,n}$ (n = 1, 2),
- $f_{PWM,1}$ eine erste Trägerfrequenz und
- $f_{PWM,2}$ eine zweite Trägerfrequenz

beschreiben.

12. Verfahren zum Betreiben eines Wechselrichters (2) zum Versorgen einer elektrischen Maschine (3), umfassend folgende von einer Steuereinrichtung (8) durchgeführte Schritte:

- Erhalten einer Spannungsinformation (17), die eine gleichstromseitige Spannung des Wechselrichters (2) beschreibt;
- Ermitteln einer Trägerfrequenz von pulsweitenmodulierten Schaltsignalen (15) zum Ansteuern des Wechselrichters (2) in Abhängigkeit der Spannungsinformation (17) derart, dass sich die Trägerfrequenz mit sinkender gleichstromseitiger Spannung erhöht; und
- Bereitstellen der Schaltsignale (15) für Schaltelemente (12) des Wechselrichters (2).

13. Computerprogramm, umfassend Befehle, die bei der Ausführung des Programms durch einen Computer diesen veranlassen, die von der Steuereinrichtung (8) durchgeführten Schritte des Verfahrens nach Anspruch 12 auszuführen.

**Fig. 1**

EP 3 772 174 A1

# Fig. 2

# Fig. 3

# Fig. 4

Europäisches
Patentamt

European
Patent Office

Office européen
des brevets

# EUROPÄISCHER RECHERCHENBERICHT

Nummer der Anmeldung

EP 20 18 7886

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | US 2015/108929 A1 (NOBE DAIGO [JP] ET AL) 23. April 2015 (2015-04-23)<br>* Abbildungen 1,3,6,7A,7B *<br>* Zusammenfassung *<br>* Absätze [0028], [0033], [0034], [0038], [0051] *<br><br>----- | 1-10,12, 13<br>11 | INV.<br>H02P27/08<br>H02M1/15 |

RECHERCHIERTE SACHGEBIETE (IPC)

H02M
H02P

Der vorliegende Recherchenbericht wurde für alle Patentansprüche erstellt

| Recherchenort | Abschlußdatum der Recherche | Prüfer |
|---|---|---|
| München | 16. Dezember 2020 | Zettler, Karl-Rudolf |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

........................................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 18 7886

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-12-2020

| Im Recherchenbericht angeführtes Patentdokument | Datum der Veröffentlichung | Mitglied(er) der Patentfamilie | Datum der Veröffentlichung |
|---|---|---|---|
| US 2015108929 A1 | 23-04-2015 | CN 104578874 A<br>JP 2015080343 A<br>US 2015108929 A1 | 29-04-2015<br>23-04-2015<br>23-04-2015 |

Für nähere Einzelheiten zu diesem Anhang : siehe Amtsblatt des Europäischen Patentamts, Nr.12/82

EPO FORM P0461